# EUROPÄISCHE PATENTSCHRIFT

(11) **EP 0 557 934 B1**
(45) Veröffentlichungstag und Bekanntmachung des Hinweises auf die Patenterteilung: **03.02.1999**
(21) Anmeldenummer: 93102776.7
(22) Anmeldetag: 23.02.1993
(51) Int. Cl.: G06K 19/07

(54) **Chipkarte mit externem Sicherheitsschalter**
Chip card with external safety switch
Carte à puce avec interrupteur de protection externe

(30) Priorität: 24.02.1992 DE 4205556
(43) Veröffentlichungstag der Anmeldung: 01.09.1993
(73) Patentinhaber: Angewandte Digital Elektronik GmbH, 21521 Dassendorf (DE)
(72) Erfinder: Kreft, Hans-Diedrich, W-2055 Dassendorf (DE)
(74) Vertreter: Mierswa, Klaus, Dipl.-Ing.

(56) Entgegenhaltungen:
- EP-A- 0 249 356
- US-A- 4 794 236
- PATENT ABSTRACTS OF JAPAN, Band 15, Nr. 47 (P-1162), 1991; & JP - A - 2280292 (MITSUBISHI ELECTRIC CORP.)
- idem
- PATENT ABSTRACTS OF JAPAN, Band 13, Nr. 389 (P-925), 1989; & JP - A - 1137388 (TORU NISHIOKA)
- PATENT ABSTRACTS OF JAPAN, Band 15, Nr. 460 (P-1278), 1991; & JP - A - 3194681 (MITSUBISHI ELECTRIC CORP.)
- PATENT ABSTRACTS OF JAPAN, Band 15, Nr. 69 (M-1083), 1991; & JP - A - 2295798 (SEIKO EPSON CORP.)

## Beschreibung

Die Erfindung betrifft eine Chipkarte gemäß dem Oberbegriff von Anspruch 1.

Im Einsatz befindliche Plastikkarten, welche elektronisch ablesbar sind, arbeiten vorzugsweise nach zwei Verfahren. Am weitesten verbreitet sind Karten mit Magnetstreifen, welche keinen Chip zur Speicherung und Bearbeitung von Informationen enthalten. Zunehmend werden Karten eingesetzt, welche einen Chip enthalten, in dem Informationen sicher gespeichert und elektronisch verändert werden können. Diese Karten werden Chipkarten oder smart cards genannt.

Die Versorgung der auf der Karte erforderlichen Chips mit Strom und Spannung geschieht über Kontakte oder kontaktfrei nach einem Verfahren, wie es in der Patentschrift DE 34 47 560 C2 dargelegt ist. Gemäß der Patentschrift DE 34 47 560 C2 arbeiten Chipkartensysteme kontaktfrei, indem Energie- und Datenübertragung induktiv erfolgen. Es sind auch Chipkarten im Einsatz, welche eine interne Stromquelle zur Aufrechterhaltung ihrer Funktion nutzen. Insbesondere wird per interner Stromquelle die Übertragung von Daten zu entfernten Empfängern ermöglicht. Das wahlweise Einschalten einer Stromquelle auf der Chipkarte ist wünschenswert, um einerseits die Stromquelle zu schonen, andererseits um Daten und Kennungen der Chipkarte nur nach Wahl des Nutzers der Chipkarte auszugeben.

Die Chips erfüllen bei herkömmlichen Karten ihre Funktion unabhängig vom Nutzer. Wird eine solche Karte in ein übliches Bediengerät gesteckt, wird der Chip in der Karte aktiviert. Damit nimmt der Chip unabhängig vom Nutzer seine Funktion auf. Dies ist in den meisten Fällen gewünscht. Unerwünscht ist die Funktion der Karte beispielsweise, wenn eine Stromquelle auf der Karte sich durch andauernde Aktivität vorzeitig entlädt.

Aus der US 4,794,236 ist eine Chipkarte mit einer internen Stromquelle bekannt, welche mit einem Schalter ein- und ausgeschaltet werden kann. Dadurch wird ein vorschnelles Entladen der internen Stromquelle verhindert. Mittels eines weiteren Schalters kann zwischen verschiedenen Funktionen der Karte umgeschaltet werden, wodurch die im Lesegerät bereitzuhaltende Datenmenge verringert werden kann.

Aus der JP 2280292 ist eine Chipkarte bekannt, welche einen Funktionsschalter aufweist, mit dem zwischen dem Beschreiben der Karte mit Daten, z.B. beim Aufladen der als Geldkarte verwendeten Karte, und deren Auslesen umgeschaltet werden kann, wodurch das Beschreiben und das Lesen der Karte vereinfacht wird.

Aus der JP 1137388 ist weiterhin eine Chipkarte mit einem Display bekannt, auf welchem die gespeicherten Daten bei Betätigung eines Schalters angezeigt werden können, falls der Benutzer einen entsprechenden Zugangs code durch Schalterdruck eingibt.

Unerwünscht ist es jedoch, wenn die Karten von außen ohne Beteiligung des Kartenträgers identifiziert werden kann. Dieser Fall tritt bei andauernder elektromagnetischer Abstrahlung von Signalen auf, wobei als Energiequelle eine auf der Karte befindliche Stromquelle infrage kommt. Es ist aber auch möglich, Karten mit kontaktfreier Datenübertragung in einem elektromagnetischen Feld unbemerkt zu aktivieren und aufgrund der charakteristischen Eigenfrequenz zu identifizieren. Insbesondere die Eigenresonanz der Kartenelektronik kontaktfreier Karten mit ihren Induktivitäten und Kapazitäten läßt sich abfragen. Beim Durchschreiten eines Türrahmens einer Eingangstür könnte eine Abfrage unbemerkt geschehen, indem im Türrahmen eine entsprechende Sende- und Empfangseinrichtung eingebaut ist.

Der Erfindung liegt daher die Aufgabe zugrunde, die Sicherheit einer Chipkarte mit kontaktfreier Datenübertragung zu erhöhen und ein unbefugtes Auslesen zu verhindern.

Die Aufgabe wird bei einer Chipkarte der eingangs genannten Gattung dadurch gelöst, daß die Elektronik der Chipkarte durch Betätigung des Schalters ganz oder teilweise aktivierbar oder deaktivierbar ist und die Charakteristik der elektromagnetischen Rückwirkung der Elektronik in einem elektromagnetischen Wechselfeld durch den Schalter veränderbar ist, wobei zur Erschwerung einer unbemerkten Identifizierung von Chipkarten gemäß der elektromagnetischen Rückwirkung die Eigenfrequenzen der Komponenten der Elektronik in Abhängigkeit von der Schalterstellung durch Zuschalten von elektronischen Komponenten veränderbar sind.

Um die unbemerkte Identifizierung von Karten per spezifischer, elektromagnetischer Rückwirkung, Spektrum der Rückkoppelfrequenzen der Oberwellen, der elektronischen Komponenten einer Karte in einem Wechselfeld zu erschweren, wird der Schalter zur Veränderung der elektronischen Eigenfrequenzen der Elektronikkomponenten verwendet.

Der Schalter schaltet vorzugsweise bei nicht aktivierter Elektronik Kapazitäten parallel zu den elektronischen Komponenten, insbesondere Spulen, auf der Karte und verändert derart das Frequenzbild der Karte in einem Hochfrequenzfeld entscheidend.

Wenn die zugeschalteten Komponenten in ihren Eigenschaften stark zeitlich variieren, ist die eindeutige Identifizierung der Karte und damit des Trägers der Karte nicht mehr möglich.

In die Plastikkarte ist somit mindestens ein Schalter eingebaut, der von außen bedienbar ist und es derart dem Nutzer der Karte gestattet, in die Funktion der Elektronik einzugreifen.

Vorzugsweise ist nicht nur die definitive Sperrung von außen möglich, sondern auch die Aktivierung in Notsituationen. So kann die Karte dauernd Signale aussenden, um eine Notsituation des Kartenträgers zu melden. Die Signale wären je nach Frequenz in einem großen Gebiet aufnehmbar, der Träger wäre mit seinem Ort aber auch mit seiner Kennung identifizierbar.

Eine Funktionssperrung oder Aktivierung von Teilen der Elektronik oder von Programmen der Chipkarte in Abhängigkeit von der Schalterstellung kommt auch für den Fall in Betracht, daß die Chipkarte in einen üblichen Schreib-/Leseschlitz gesteckt wird, und zwar unabhängig von einer Aktivierung der Stromquelle und damit der Chipkarte; per Schalter bestimmt der Kartennutzer, ob Funktionen gesperrt oder geöffnet bleiben.

Die Schalter können, eingebettet in das Kartenmaterial, als Kippschalter ausgeführt sein, indem zwei erkennbare Ausprägungen an der Oberfläche der Karte die Schaltstellung offenbaren. Vorzugsweise kann die Wölbung den Aktivzustand intiieren und die Einbuchtung den inaktiven Zustand, da eine Einbuchtung bei entsprechender Ausführung seltener eine unbeabsichtigte Aktivierung hervorrufen dürfte. Durch die erkennbare Wölbung oder Einbuchtung ist die Stelle des Schalters für den Nutzer klar erkennbar. Die Stellung kann auch durch optische Anzeigen, Färbungen des Kartenmaterials oder weitere Merkmale erkennbar gemacht werden.

Aus Sicherheitsgründen ist es sinnvoll, wenn der Schaltzustand erst durch ein wiederholtes Bedienen zu aktivieren ist. Die Sequenz der Be- und Entlastung des Schalters kann in der Form einer Codierung ähnlich wie beim Morsen gegeben werden.

## Patentansprüche

1. Chipkarte mit wenigstens einem manuell zu betätigenden Schalter wobei die Elektronik der Chipkarte durch Betätigung des Schalters ganz oder teilweise aktivierbar oder deaktivierbar ist, dadurch gekennzeichnet,
daß die Chipkarte mittels einer Elektronik Daten kontaktfrei zu übertragen imstande ist, und die Charakteristik der elektromagnetischen Rückwirkung der Elektronik in einem elektromagnetischen Wechselfeld durch den Schalter veränderbar ist, wobei zur Erschwerung einer unbemerkten Identifizierung von Chipkarten gemäß der elektromagnetischen Rückwirkung die Eigenfrequenzen der Komponenten der Elektronik in Abhängigkeit von der Schalterstellung durch Zuschalten von elektronischen Komponenten veränderbar sind.

2. Chipkarte nach Anspruch 1, dadurch gekennzeichnet,
daß die zuschaltbaren Komponenten in ihren Eigenschaften zeitlich variieren, so daß sich das Frequenzbild der Chipkarte in einem äußeren elektromagnetischen Wechselfeld zeitlich verändert.

3. Chipkarte nach Anspruch 1 oder 2, dadurch gekennzeichnet,
daß Kondensatoren den Komponenten der Elektronikeinheit, insbesondere vorhandenen Spulen, parallel zuschaltbar sind.

4. Chipkarte nach einem der Ansprüche 1 bis 3, dadurch gekennzeichnet,
daß in einer Schalterstellung ein Notsignal aktiviert wird.

5. Chipkarte nach Anspruch 4, dadurch gekennzeichnet,
daß die Chipkarte bei Aktivierung des Notsignals eine Kennung zur Identifizierung der Karte ausgesendet wird.

6. Chipkarte nach einem der Ansprüche 1 bis 5, dadurch gekennzeichnet,
daß der bzw. die Schalter durch eine Druckbelastungs- und Entlastungssequenz aktiviert werden.

7. Chipkarte nach einem der Ansprüche 1 bis 6, dadurch gekennzeichnet,
daß die Stellung des einzelnen Schalters durch eine Wölbung bzw. Einbuchtung an der Oberfläche der Chipkarte ersichtlich ist.

8. Chipkarte nach Anspruch 7, dadurch gekennzeichnet,
daß eine Einbuchtung an der Oberfläche der Chipkarte den inaktiven Zustand des Schalters initiiert.

9. Chipkarte nach einem der Ansprüche 1 bis 6, dadurch gekennzeichnet,
daß die Schalterstellung durch eine optische Anzeige oder Färbung des Kartenmaterials erkennbar ist.

## Claims

1. Chip card with at least one switch that can be actuated manually, whereby the electronic system of the chip card can be entirely or partially activated or deactivated, characterized in that
the chip card is capable of transmitting data contact-free by means of an electronic system and the characteristics of the electromagnetic feedback of the electronic system can be changed in an electromagnetic alternating field by means of the switch, whereby, in order to make it more difficult for an identification of the card to go unnoticed, on the basis of the electromagnetic feedback, the characteristic frequencies of the components of the electronic system can be changed as a function of the switch position by connecting electronic components.

2. Chip card according to Claim 1, characterized in that
the connectable components vary in their properties over time so that the frequency pattern of the chip card changes over time in an external electromagnetic alternating field.

3. Chip card according to Claim 1 or 2, characterized in that
condensers can be connected in parallel to the components of the electronic unit, especially any coils that are present.

4. Chip cards according to one of the Claims 1 through 3, characterized in that
an emergency signal is activated in a switch position.

5. Chip card according to Claim 4, characterized in that,
when the emergency signal is activated, the chip card transmits an identification signal for identifying the card.

6. Chip card according to one of Claims 1 through 5, characterized in that
the switch(es) is (are) activated by a sequence consisting of the application and release of pressure.

7. Chip card according to one of Claims 1 through 6, characterized in that
the position of the individual switch can be seen by a convexity or by a concavity on the surface of the chip card.

8. Chip card according to Claim 7, characterized in that
a concavity on the surface of the chip card initiates the inactive state of the switch.

9. Chip card according to one of Claims 1 through 6, characterized in that
the switch position can be recognized by a visual display or coloration on the card material.

## Revendications

1. Carte à puce comprenant au moins un commutateur à commande manuelle qui permet d'activer ou de désactiver complètement ou partiellement le système électronique de la carte à puce, caractérisée en ce que
la carte à puce, grâce à son système électronique, est en mesure de tansmettre sans contact des données et que la caractéristique de la rétroaction électromagnétique de l'électronique dans un champ électromagnétique alternatif peut être variée par le commutateur, et que, pour rendre difficile toute identification inaperçue de la carte à puce selon la rétroaction électromagnétique, les fréquences propres des composants du système électronique peuvent être variées en fonction de la position du commutateur, par la mise en circuit de composants électroniques.

2. Carte à puce selon la revendication 1, caractérisée en ce que
les composants pouvant être mis en circuit varient dans le temps en ce qui concerne leurs propriétés, de sorte que l'image fréquentielle de la carte à puce varie dans le temps dans un champ électromagnétique alternatif extérieur.

3. Carte à puce selon l'une quelconque des revendications 1 ou 2, caractérisée en ce que
des condensateurs peuvent être mis en parallèle dans le circuit des composants de l'unité électronique, notamment des bobines existantes.

4. Carte à puce selon l'une quelconque des revendications 1 à 3, caractérisée en ce que
dans l'une des positions du commutatuer, un signal de détresse est activé.

5. Carte à puce selon la revendication 4, caractérisée en ce que,
lorsque le signal de détresse est activé, la carte à puce émet un code permettant l'identification de la carte.

6. Carte à puce selon l'une quelconque des revendications 1 à 5, caractérisée en ce que
le ou les commutateurs sont activés par une séquence de contrainte et de relâchement de la contrainte mécanique.

7. Carte à puce selon l'une quelconque des revendications 1 à 6, caractérisée en ce que
la position du commutateur individuel est visible par un bombement ou une empreinte à la surface de la carte à puce.

8. Carte à puce selon la revendication 7, caractérisée en ce que
une empreinte à la surface de la carte à puce déclenche l'état inactif du commutateur.

9. Carte à puce selon l'une quelconque des revendications 1 à 6, caractérisée en ce que
la position du commutateur est visible sur un indicateur optique ou par la coloration du matériau de la carte.
